# EUROPÄISCHE PATENTANMELDUNG

(11) **EP 0 838 366 A2**
(43) Veröffentlichungstag der Anmeldung: **29.04.1998**
(21) Anmeldenummer: 97112580.2
(22) Anmeldetag: 23.07.1997
(51) Int. Cl.: B60P 3/36

(54) **Wohnwagen**

(30) Priorität: 05.10.1996 DE 29617336 U
(71) Anmelder: DETHLEFFS GmbH, D-88316 Isny (DE)
(72) Erfinder: Schmidt, Gerhard, 88316 Isny (DE)
(74) Vertreter: Patentanwälte Eisele, Otten & Roth

(57) **Zusammenfassung**

Bei einem Wohnwagen mit einer den Aufbau nach unten abschließenden Bodenplatte (1) und gummibereiften Rädern haben die Felgen der Räder einen Durchmesser von höchstens 10 Zoll und sie sind ohne Radkasten unterhalb der Bodenplatte angebracht. Die Bodenplatte kann an ihrer Unterseite über den Rädern angeordnete Aussparungen (5) aufweisen.

## Beschreibung

Die Erfindung betrifft einen Wohnwagen mit einer den Aufbau nach unten abschließenden Bodenplatte und mit gummibereiften Rädern, insbesondere einen Wohnanhänger.

Die bekannten Wohnwagen haben Räder mit 13 oder 14 Zoll Felgendurchmesser. Der Boden des Wohnwagenaufbaus und damit auch der Schwerpunkt des Fahrzeugs sollte aber möglichst tief liegen aus Gründen des bequemeren Einstiegs und der besseren Fahrstabilität. Die bekannten Wohnwagen haben deshalb Radkästen, in welche die Räder von unten hineinragen oder zumindest einfedern. Radkästen beeinträchtigen aber die freie Grundrißnutzung und erfordern einen hohen Fertigungsaufwand.

Der Erfindung liegt die Aufgabe zugrunde, einen besonders preiswerten Wohnwagen vorzuschlagen, der neue und originelle Grundrißkonzeptionen ermöglicht.

Diese Aufgabe wird ausgehend von einem Wohnwagen der einleitend bezeichneten Art durch die im Anspruch 1 gekennzeichneten Maßnahmen gelöst. Diese bestehen - kurz gesagt - in der Verwendung besonders kleiner Räder und im Wegfall der Radkästen. Praktikable Abmessungen ergeben sich , wenn der Felgendurchmesser zehn Zoll oder weniger beträgt. Dann können nämlich die Räder auch unter Berücksichtigung des notwendigen Federweges unter der Bodenplatte, also innerhalb der Fahrzeuggesamtbreite, angebracht werden ohne daß die Bodenplatte Radkastenausschnitte hat. Dabei ist es durchaus akzeptabel, wann der Boden gegenüber der Bodenhöhe üblicher Wohnwagen um 50 oder 60 Millimeter höher liegt. Die kleineren Räder bringen eine Tieferlegung des Fahrgestellschwerpunkts mit sich, so daß der Schwerpunkt des Fahrzeugs insgesamt in annehmbarer Höhe bleibt.

Die Erfindung ist nicht nahegelegt durch an sich bekannte sog. Mobile Homes, d. h. transportable Bauten für Dauercamping, die auf öffentlichen Straßen als Sondertransporte behandelt werden und nur für sehr geringe Geschwindigkeiten zugelassen sind. Die Erfindung betrifft demgegenüber Wohnwagen, die von Kraftfahrzeugen gezogen werden und bis zu 80 km pro Stunde zugelassen sind.

Eine zweckmäßige Weiterbildung des Erfindungsgedankens besteht darin, daß die Bodenplatte an ihrer Unterseite Aussparungen aufweist, die über den Rädern liegen. Es handelt sich dabei um angedeutete Radkästen, welche die Bodenplatte nicht durchsetzen, sondern nur die Dicke der Bodenplatte örtlich reduzieren. Gewöhnlich sind die Bodenplatten als Sandwichplatten ausgebildet mit Sperrholz an den Außenseiten und einem Kern aus Kunststoff-Hartschaum. In diesem Fall kann die Bodenplatte bis zur oberen Sperrholzschicht ausgehöhlt sein. Zweckmäßigerweise wird durch einen Kunststoffeinsatz das Eindringen von Feuchtigkeit in den Schichtaufbau verhindert.

Ein Ausführungsbeispiel der Erfindung ist in der beigefügten Zeichnung dargestellt.
- Fig. 1: zeigt einen Wohnwagen nach dem Stand der Technik mit Rädern von einer Größe, die einen Radkasten erfordert. Dieser ist offen dargestellt.
- Fig. 2: zeigt einen erfindungsgemäßen Wohnwagen. Die Räder sind wesentlich kleiner. Radkästen sind hier keine vorhanden. Die Höhe des Wagenbodens über der Fahrbahn ist etwas größer als bei dem bekannten Wohnwagen nach Fig. 1.

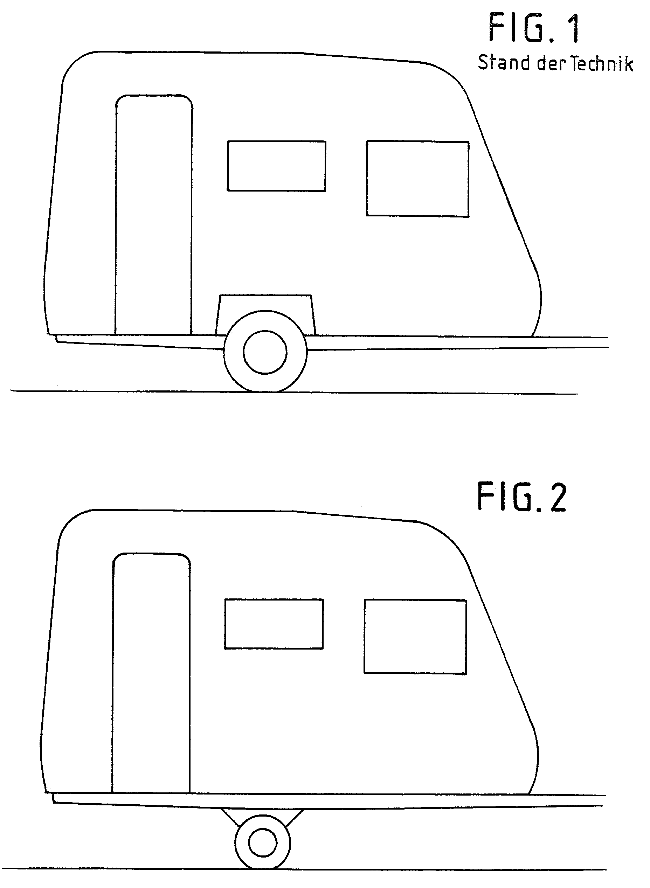

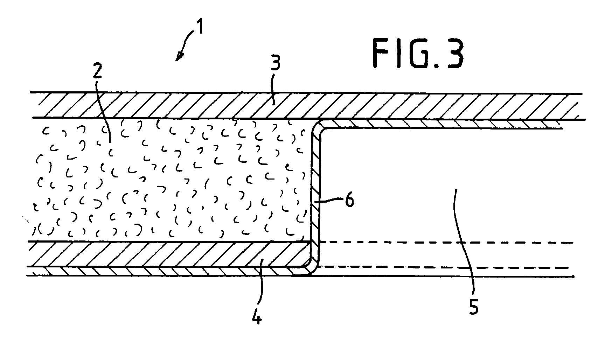

- Fig. 3: ist ein Vertikalschnitt durch eine Partie der Bodenplatte 1 des Wohnwagens nach Fig. 2, um eine der Aussparungen 5 zu zeigen, welche ein Einfedern der Räder bis in den Dickenbereich der Bodenplatte 1 möglich machen. Die Bodenplatte 1 besteht aus einer oberen Sperrholzschicht 3, einer unteren Sperrholzschicht 4, beide von 6 mm Dicke, und einem 30 mm starken Kern 2 aus Hartschaumstoff. Die Aussparung 5 reicht von unten bis zur oberen Sperrholzschicht 3. In dem Aussparungsbereich ist also die untere Sperrholzschicht und der Schaumstoffkern weggefräst. Um das Eindringen von Feuchtigkeit und Schmutz in das Schichtgefüge zu verhindern, ist die Aussparung 5 mit einem hutförmigen Kunststoffeinsatz 6 ausgekleidet, dessen Randstreifen an der Unterseite der unteren Sperrholzschicht 4 anliegt. Auf diese Weise ist ein zusätzlicher Federweg von immerhin 33 mm für die kleinen Räder gewonnen. An der Wageninnenfür die kleinen Räder gewonnen. An der Wageninnenseite, d. h. Oberseite, ist die Bodenplatte 1 unverändert.

## Patentansprüche

1. Wohnwagen mit einer den Aufbau nach unten abschließenden Bodenplatte und gummibereiften Rädern, insbesondere Wohnanhänger, dadurch gekennzeichnet, daß die Räder Felgen mit einem Durchmesser von höchstens zehn Zoll aufweisen und unterhalb der Bodenplatte angeordnet sind, die sich über die gesamte Aufbaugrundfläche erstreckt.

2. Wohnwagen nach Anspruch 1, dadurch gekennzeichnet, daß die Bodenplatte (1) an ihrer Unterseite über den Rädern angeordnete Aussparungen (5) aufweist.
